# EUROPÄISCHE PATENTSCHRIFT

(11) **EP 3 058 808 B1**
(45) Veröffentlichungstag und Bekanntmachung des Hinweises auf die Patenterteilung: **18.08.2021**
(21) Anmeldenummer: 16000362.0
(22) Anmeldetag: 13.02.2016
(51) Int. Cl.: A01G 3/08, F16B 7/14, B27B 17/00

(54) **HANDGEFÜHRTES ARBEITSGERÄT MIT EINEM TELESKOPABSCHNITT**
HAND-HELD WORK DEVICE WITH A TELESCOPIC SECTION
APPAREIL DE TRAVAIL PORTATIF DOTE D'UNE SECTION TELESCOPIQUE

(30) Priorität: 17.02.2015 EP 15000469
(43) Veröffentlichungstag der Anmeldung: 24.08.2016
(73) Patentinhaber: Andreas Stihl AG & Co. KG, 71336 Waiblingen (DE)
(72) Erfinder: Densborn, Gerd, 71334 Waiblingen (DE); Föhrenbach, Jan, 70734 Fellbach (DE); Barth, Benjamin, 71576 Burgstetten (DE)
(74) Vertreter: Reinhardt, Annette

(56) Entgegenhaltungen:
- DE-A1- 19 618 024
- US-A- 3 284 114
- US-A- 5 011 104
- US-A1- 2002 172 548

## Beschreibung

Die Erfindung betrifft ein handgeführtes Arbeitsgerät mit einem Teleskopabschnitt der im Oberbegriff des Anspruchs 1 angegebenen Gattung.

Aus der DE 196 18 024 A1 ist ein Hochentaster bekannt, dessen Führungsrohr einen Teleskopabschnitt besitzt. Um das Außenrohr des Teleskopabschnitts auf dem Innenrohr zu fixieren, ist ein Klemmstück vorgesehen, das mittels Schrauben tangential zusammengezogen und dadurch fixiert wird.

**Aus der** US 5,011,104 A **und der** US 3,284,114 A **sind Teleskopeinrichtungen bekannt, die ein Klemmelement umfassen, das in radialer Richtung zusammengedrückt wird. Hierzu sind konische Flächen zwischen dem Klemmelement und axial hierzu bewegten Spannbuchsen vorgesehen. Zur Fixierung der Teleskopeinrichtungen muss zunächst die Reibung an den konischen Flächen überwunden werden.**

Der Erfindung liegt die Aufgabe zugrunde, ein handgeführtes Arbeitsgerät mit einem Teleskopabschnitt der gattungsgemäßen Art zu schaffen, das einen einfachen Aufbau besitzt und eine vereinfachte Bedienung ermöglicht.

Diese Aufgabe wird durch ein handgeführtes Arbeitsgerät mit einem Teleskopabschnitt mit den Merkmalen des Anspruchs 1 gelöst.

Für die Klemmvorrichtung, die das Innenrohr gegenüber dem Außenrohr des Teleskopabschnittes fixiert, ist ein Spannstück vorgesehen, das über eine Gewindeverbindung mit dem Außenrohr verbunden ist und das gegenüber dem Innenrohr drehbar gelagert ist. Es ist mindestens ein am Außenumfang des Innenrohrs angeordneter, gewölbter Spannring vorgesehen, der sich an einer axialen Seite gegenüber dem Außenrohr und an der anderen axialen Seite gegenüber dem Spannstück abstützt. Wird der Spannring in Richtung einer Längsmittelachse des Führungsrohrs zusammengedrückt, so verkleinert sich die Öffnung des Spannrings.

Ein Drehen des Spannstücks bewirkt aufgrund der Gewindeverbindung eine axiale Bewegung des Spannstücks gegenüber dem Außenrohr. Wird das Spannstück so gedreht, dass der Spannring in Richtung der Längsmittelachse des Führungsrohrs zusammengedrückt wird, so verkleinert sich die Öffnung des Spannrings, wodurch der Spannring auf dem Innenrohr festgeklemmt wird. Dadurch ist die axiale Position des Spannrings auf dem Innenrohr festgelegt. Dadurch, dass sich der Spannring an einer Seite gegenüber dem Außenrohr und an der anderen axialen Seite gegenüber dem Spannstück abstützt, das seinerseits mit dem Außenrohr über die Gewindeverbindung verbunden ist, ist auch die axiale Position des Außenrohrs gegenüber dem Innenrohr festgelegt. Über das Spannstück ist die Spannkraft durch entsprechend weites Drehen des Spannstücks auf einfache Weise einstellbar.

Die Gewindeverbindung kann dabei eine Gewindeverbindung sein, die sich über mehrere vollständige Gewindegänge erstreckt. Die Gewindegänge können jedoch auch unterbrochen sein. Die Gewindeverbindung kann auch nach Art einer Bajonettverbindung ausgebildet sein, deren Gewindegang sich über weniger als 360° erstreckt. Dabei können auch mehrere parallel zueinander verlaufende Teilgewindegänge vorgesehen sein. Die Gewindeverbindung kann beispielsweise so vorgesehen sein, dass zum Fixieren und Lösen eine drei Viertel Umdrehung benötigt wird. Die Gewindeverbindung kann vorteilhaft mindestens eine Raststellung an einer Endposition aufweisen. Vorteilhaft sind eine erste Raststellung bei gelöster Klemmvorrichtung und eine zweite Raststellung bei fixierter Klemmvorrichtung vorgesehen.

Die Klemmvorrichtung kann einfach durch bloßes Drehen des Spannstücks gelöst und fixiert werden. Die Klemmvorrichtung besitzt keine Bauteile wie Schrauben oder dergleichen, die in vollständig gelöstem Zustand der Klemmvorrichtung verloren gehen können. Ein Werkzeug wird zum Lösen und Fixieren der Klemmvorrichtung nicht benötigt. Über den mindestens einen Spannring kann eine einfache und sichere Fixierung des Innenrohrs gegenüber dem Außenrohr erfolgen. Auch eine Klemmung unrunder Querschnittsformen ist möglich. Die gewünschte Klemmkraft kann durch entsprechende Auslegung des Spannrings und durch Anpassung der Anzahl der Spannringe eingestellt werden. Bei nachlassender Spannkraft, beispielsweise durch Alterung, ist ein einfacher Austausch des mindestens einen Spannrings möglich.

Vorteilhaft ist am Außenrohr ein Endstück fixiert, das ein Außengewinde der Gewindeverbindung trägt. Da das Außenrohr nicht selbst das Außengewinde trägt, ist ein einfacher Aufbau des Außenrohrs möglich. Die Gewindeverbindung ist vorteilhaft als Feingewinde mit geringer Steigung ausgebildet. Dadurch ergibt sich eine gute Einstellbarkeit der Spannkraft. Die Steigung des Gewindes beträgt vorteilhaft weniger als 5 mm, insbesondere weniger als 3 mm. Aufgrund der geringen Gewindesteigung ist das beim Drehen des Spannstücks aufzubringende Drehmoment gering, so dass zum Drehen des Spannstücks kein Werkzeug benötigt wird. Das Gewinde kann vorteilhaft durch einzelne Gewindeabschnitte gebildet sein, die in Umfangsrichtung voneinander beabstandet sind. Dadurch können das Spannstück und das Endstück in axialer Richtung übereinander geschoben werden, und die Klemmvorrichtung kann durch Drehen des Spannstücks um deutlich weniger als eine Umdrehung fixiert werden.

Vorteilhaft weisen das Innenrohr und das Außenrohr einen von der Kreisform abweichenden Querschnitt auf. Dadurch ist über die Außenkontur von Innenrohr und Außenrohr eine Verdrehsicherung gegeben. Vorteilhaft sind zusätzliche Führungsteile zur Verdrehsicherung vorgesehen. Das Innenrohr und das Außenrohr sind insbesondere als geschweißte Rohre mit geringer Wandstärke ausgebildet. Der unrunde Querschnitt kann beim Richten der geschweißten Rohre auf einfache Weise hergestellt werden, insbesondere, wenn der Querschnitt ein abgeflachter Kreisquerschnitt, vorzugsweise ein an mehreren Seiten abgeflachter Kreisquerschnitt ist. Der Querschnitt des Innenrohrs weist vorteilhaft ebene Seiten auf, die über abgerundete Ecken verbunden sind. Vorteilhaft ist das Innenrohr an mindestens einer seiner ebenen Seiten verdrehsicher gegenüber dem Außenrohr gehalten. Das Spannstück ist vorteilhaft gegenüber dem Innenrohr drehbar gelagert. Beim Fixieren der Klemmvorrichtung wird das Spannstück gegenüber dem Innenrohr und gegenüber dem Außenrohr gedreht, während Innenrohr und Außenrohr verdrehsicher zueinander gehalten sind.

Vorteilhaft liegt das Endstück mindestens teilweise an der Außenkontur des Innenrohrs an und positioniert das Innenrohr und das Außenrohr verdrehsicher zueinander. Das Endstück dient demnach vorteilhaft sowohl zur verdrehsicheren Positionierung von Innenrohr und Außenrohr zueinander als auch dazu, die Gewindeverbindung zum Spannstück herzustellen. Bevorzugt stützt sich der mindestens eine Spannring über das Endstück an dem Außenrohr ab, so dass über das Endstück gleichzeitig eine gute Krafteinleitung in das Außenrohr sichergestellt wird.

Vorteilhaft liegt das Endstück nur an den ebenen Seiten des Innenrohrs und nicht an den abgerundeten Ecken an. Die ebenen Seiten des Innenrohrs können einfach mit vergleichsweise hoher Genauigkeit gefertigt werden. Über die abgerundeten Ecken ist ein Toleranzausgleich möglich, insbesondere, wenn das Innenrohr als längsgeschweißtes Rohr ausgebildet ist, dessen ebene Seiten beim Richten des Rohrs hergestellt werden.

Es ist vorteilhaft vorgesehen, dass das Spannstück eine Druckfläche aufweist, an der sich der mindestens eine Spannring axial abstützt. Das Endstück besitzt vorteilhaft an seiner der Druckfläche abgewandten Seite Mittel zur Zentrierung des Spannstücks. Über das Endstück kann so auf einfache Weise eine gute Lagesicherung des Spannstücks erreicht werden. Insbesondere bei einem Außenrohr mit unrundem Querschnitt kann sich das Spannstück nicht oder nur abschnittsweise an der Außenseite des Außenrohrs abstützen, da das Spannstück gegenüber dem Innenrohr drehbar sein muss. Bevorzugt liegt das Spannstück nicht am Außenumfang des Innenrohrs an. Über das Endstück kann auf einfache Weise eine Zentrierung des Spannstücks erreicht werden.

Das Spannstück ist insbesondere als Hülse ausgebildet, die in verspanntem Zustand der Klemmvorrichtung mindestens teilweise über die Mittel zur Zentrierung ragt. Durch die hülsenförmige Ausbildung des Spannstücks ergibt sich ein kompaktes Äußeres. Ein Hängenbleiben an nach außen ragenden Konturen, wie sie bei herkömmlichen Klemmeinrichtungen bekannt sind, wird dadurch vermieden. Die Mittel zur Zentrierung umfassen bevorzugt einen Rand, der einen Ringraum zwischen dem Außenrohr und dem Spannstück in verspanntem Zustand der Klemmvorrichtung mindestens teilweise verschließt. Der Rand bewirkt dadurch zugleich einen Schutz des Ringraums vor Verschmutzung. Vorteilhaft bildet das Endstück keinen Anschlag für das Spannstück. Das Spannstück kann vorteilhaft frei über die Mittel zur Zentrierung geschoben werden. Dadurch kann die Klemmkraft auch dann, wenn die Spannkraft des mindestens einen Spannrings nachgelassen hat oder wenn der Einsatz einer geringeren Anzahl von Spannringen vorgesehen ist, vollständig gespannt werden.

Ein einfacher Aufbau ergibt sich, wenn das Endstück auf das Außenrohr aufgeclipst ist.

Der mindestens eine Spannring besitzt vorteilhaft radial nach innen ragende Klemmfinger, die in verspanntem Zustand der Klemmvorrichtung mit ihrem freien Ende gegen das Innenrohr drücken. Der mindestens eine Spannring liegt vorteilhaft in ungespanntem Zustand am Innenrohr an. Dadurch wird ein geringer Klemmweg erreicht. Der Spannring ist dabei vorteilhaft in Längsrichtung des Innenrohrs leicht verschiebbar, um eine einfache Einstellbarkeit der gewünschten Länge des Teleskopabschnitts zu erlauben. Um ein axiales Zusammendrücken des Spannrings zu ermöglichen, ist vorteilhaft vorgesehen, dass der Außenrand des mindestens einen Spannrings zum Spannstück einen Abstand in radialer Richtung besitzt. Der Spannring kann sich dadurch bei axialem Zusammendrücken auch nach außen aufweiten. Dabei ist ein geringer radialer Spalt zwischen dem Spannring und dem Spannstück ausreichend.

Vorteilhaft sind mehrere Spannringe vorgesehen. Die Spannringe bilden vorteilhaft eine Spannringanordnung. Mindestens zwei Spannringe sind dabei vorteilhaft in Reihe zueinander geschaltet. Die Spannringanordnung kann ein oder mehrere Spannringpakete umfassen, die vorteilhaft in Reihe zueinander geschaltet sind. Ein Spannringpaket besteht dabei aus mindestens einem Spannring und kann insbesondere mehrere in Reihe und/oder parallel zueinander geschaltete Spannringe umfassen. Eine Reihenschaltung von Spannringen bezeichnet dabei die gegensinnige Anordnung von Spannringen und eine Parallelschaltung eine gleichsinnige Anordnung von Spannringen. Innerhalb eines Spannringpakets ist die Federkonstante konstant.

Benachbarte Spannringe liegen bevorzugt in mindestens einem Spannringpaket jeweils benachbart zu ihren Innenrändern oder benachbart zu ihren Außenrändern aneinander an. Im Querschnitt ergibt sich dadurch ein zickzackförmiger Verlauf der aneinander anliegenden Spannringe. Die Spannringe sind in einer Reihenschaltung angeordnet.

Es hat sich gezeigt, dass die Spannringe beim Betätigen der Klemmvorrichtung nicht gleichmäßig belastet werden. Die Belastung der benachbart zur Druckfläche angeordneten Spannringe ist höher als die der weiter von der Druckfläche entfernt angeordneten Spannringe. Zur Anpassung der Beanspruchung der Spannringe ist vorteilhaft vorgesehen, dass die Spannringanordnung mehrere Spannringpakete mit unterschiedlichen Federkonstanten umfasst. Bevorzugt ist angrenzend an mindestens eine Druckfläche ein erstes Spannringpaket mit einer ersten Federkonstante angeordnet und angrenzend an das erste Spannringpaket ein zweites Spannringpaket. Das zweite Spannringpaket besitzt insbesondere eine zweite, niedrigere Federkonstante. Um unterschiedliche Federkonstanten von Spannringpaketen zu erreichen, kann vorgesehen sein, den Innendurchmesser der Spannringe eines Spannringpakets geringer auszubilden als den Innendurchmesser der Spannringe eines anderen Spannringpakets. Die Spannringe besitzen vorteilhaft radial nach innen ragende Klemmfinger. Zur Anpassung der Federkonstante kann auch vorgesehen sein, dass die Länge der Klemmfinger unterschiedlicher Spannringe unterschiedlich ist. Auch eine Reihen- und/oder Parallelschaltung von Spannringen oder eine Kombination dieser Maßnahmen kann vorteilhaft sein. Der mindestens eine Spannring besteht vorteilhaft aus Kunststoff. Der Kunststoff ist insbesondere ein POM (Polyoxymethylen).

Vorteilhaft ist eine Dichtung vorgesehen, die das Eindringen von Verschmutzungen zwischen das Innenrohr und das Außenrohr vermeidet. Die Dichtung ist vorteilhaft zwischen dem mindestens einen Spannring und dem Endstück vorgesehen. Es kann jedoch auch vorteilhaft sein, dass die Dichtung zwischen dem Spannring und einer Druckfläche des Spannstücks vorgesehen ist. Dadurch wird auch der Raum, in dem der mindestens eine Spannring angeordnet ist, gegenüber der Umgebung abgedichtet. Der Innenquerschnitt der Dichtung ist vorteilhaft auf den Außenquerschnitt des Innenrohrs angepasst. Das Innenrohr und das Außenrohr weisen vorteilhaft jeweils eine in Längsrichtung verlaufende Schweißnaht auf. Durch die Ausbildung als geschweißte Rohre können das Innenrohr und das Außenrohr gegenüber einem stranggepressten Rohr mit kreisförmigem Querschnitt mit verringerter Wandstärke ausgeführt werden. Dadurch ergibt sich ein verringertes Gewicht des Arbeitsgerätes.

Um eine gute Führung des Außenrohrs auf dem Innenrohr zu erreichen, ist vorteilhaft vorgesehen, dass an dem in das Außenrohr ragenden Ende des Innenrohrs ein Führungsteil angeordnet ist, das das Innenrohr im Außenrohr führt. Vorteilhaft sind weitere Führungsteile zwischen Innenrohr und Außenrohr in einem Abstand zum Ende des Innenrohrs vorgesehen.

Der Antriebsmotor ist vorteilhaft Teil einer Antriebseinheit, die an einem ersten Ende des Führungsrohrs angeordnet ist. Die Werkzeugeinheit ist vorteilhaft an einem zweiten Ende des Führungsrohrs angeordnet, wobei durch das Führungsrohr eine Antriebswelle ragt, die als Teleskopwelle ausgebildet ist. Die Antriebswelle dient zur Übertragung der Antriebsenergie, und zwar als Rotation der Antriebswelle um ihre Längsachse. Die Antriebswelle ist vorteilhaft über mindestens ein Lagerteil in dem Innenrohr gelagert. Vorteilhaft sind mehrere, in axialem Abstand zueinander angeordnete Lagerteile vorgesehen. Der Antriebsmotor kann jedoch auch an der Werkzeugeinheit angeordnet sein. Der Antriebsmotor ist dann vorteilhaft als Elektromotor ausgebildet und über ein Kabel, insbesondere ein Spiralkabel, mit einer am anderen Ende des Führungsrohrs angeordneten Energieversorgung, insbesondere einem Akku, verbunden. Das Kabel ist dabei vorteilhaft durch das Führungsrohr geführt.

Ausführungsbeispiele der Erfindung werden im Folgenden anhand der Zeichnung erläutert. Es zeigen:
- Fig. 1: eine perspektivische Darstellung eines Hochentasters,
- Fig. 2: eine schematische Darstellung der Antriebseinheit des Hochentasters aus Fig. 1,
- Fig. 3: einen Schnitt durch eine Klemmvorrichtung des Hochentasters aus Fig. 1,
- Fig. 4: einen Schnitt entlang der Linie IV-IV in Fig. 3,
- Fig. 5: einen Schnitt entlang der Linie V-V in Fig. 3,
- Fig. 6: einen Schnitt entlang der Linie VI-VI in Fig. 3,
- Fig. 7: eine perspektivische Darstellung eines Endabschnitts des Innenrohrs,
- Fig. 8: eine perspektivische Darstellung eines Spannrings,
- Fig. 9: eine Draufsicht auf den Spannring aus Fig. 8,
- Fig. 10: eine Seitenansicht in Richtung des Pfeils X in Fig. 9,
- Fig. 11: eine schematische Darstellung eines Ausführungsbeispiels eines Hochentasters,
- Fig. 12 bis 14: Schnittdarstellungen von Ausführungsbeispielen von Klemm-vorrichtungen.

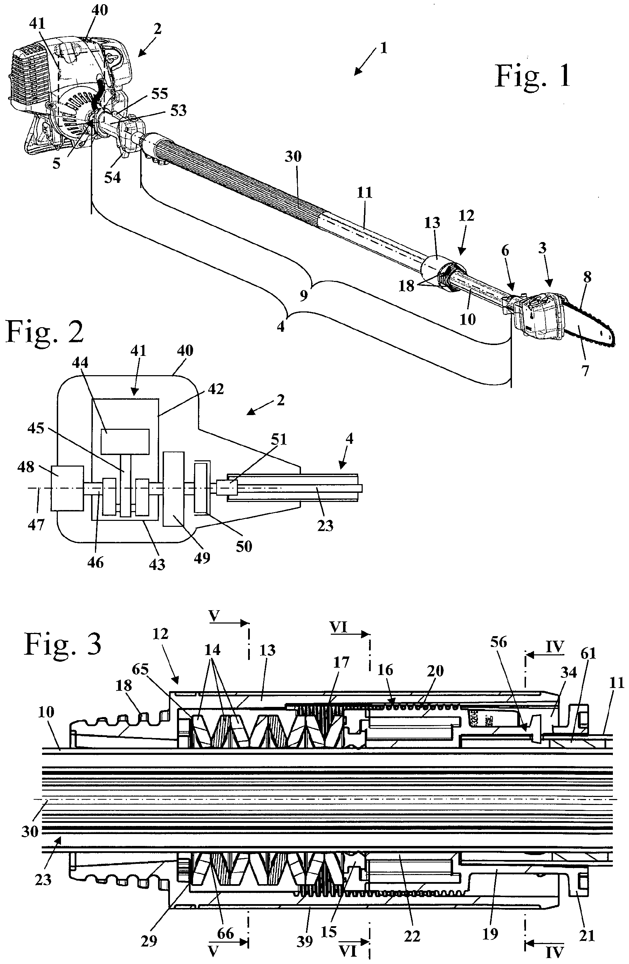

Fig. 1 zeigt als Ausführungsbeispiel für ein handgeführtes Arbeitsgerät mit einem Teleskopabschnitt einen Hochentaster 1. Anstatt eines Hochentasters kann auch ein anderes handgeführtes Arbeitsgerät wie beispielsweise ein Heckenschneider oder dergleichen vorgesehen sein. Der Hochentaster 1 besitzt eine Antriebseinheit 2 mit einem Gehäuse 40, in dem ein in Fig. 1 schematisch gezeigter Antriebsmotor 41 angeordnet ist.

Der Hochentaster 1 besitzt außerdem eine Werkzeugeinheit 3, die über ein Führungsrohr 4 mit der Antriebseinheit 2 verbunden ist. Die Antriebseinheit 2 ist dabei an einem ersten Ende 5 des Führungsrohrs 4 angeordnet, und die Werkzeugeinheit 3 ist an einem zweiten Ende 6 des Führungsrohrs 4 gehalten. Die Werkzeugeinheit 3 besitzt eine Führungsschiene 7, an der eine Sägekette 8 umlaufend angetrieben ist.

Das Führungsrohr 4 besitzt einen Teleskopabschnitt 9, der sich über einen Großteil der Länge des Führungsrohrs 4 erstreckt. Das Führungsrohr besitzt eine Längsmittelachse 30. Benachbart zum ersten Ende 5 des Führungsrohrs 4 ist am Führungsrohr 4 ein Handgriff 53 angeordnet. Am Handgriff 53 sind Bedienelemente angeordnet, nämlich ein Gashebel 54 zur Bedienung des Antriebsmotors 41 sowie eine Gashebelsperre 55.

Der Teleskopabschnitt 9 besitzt ein Innenrohr 10, an dem die Werkzeugeinheit 3 festgelegt ist. Der Teleskopabschnitt 9 umfasst außerdem ein Außenrohr 11, das mit der Antriebseinheit 2 fest verbunden ist. Das Innenrohr 10 ist gegenüber dem Außenrohr 11 über eine lösbare Klemmvorrichtung 12 fixiert. Die Klemmvorrichtung 12 besitzt ein Spannstück 13, das gegenüber dem Innenrohr 10 und dem Außenrohr 11 drehbar gelagert ist. Die Gestaltung der Klemmvorrichtung 12 wird im Folgenden noch näher erläutert.

Fig. 2 zeigt den Aufbau der Antriebseinheit 2 schematisch. Im Gehäuse 40 ist der Antriebsmotor 41 angeordnet, der als Einzylinder-Verbrennungsmotor ausgebildet ist. Der Antriebsmotor 41 ist insbesondere ein Zweitaktmotor oder ein gemischgeschmierter Viertaktmotor. Der Antriebsmotor 41 besitzt einen Zylinder 42, in dem ein Kolben 44 hin- und hergehend gelagert ist. Der Kolben 44 treibt über einen Pleuel 45 eine in einem Kurbelgehäuse 43 um eine Drehachse 47 drehbar gelagerte Kurbelwelle 46 rotierend an. Die Antriebseinheit 2 besitzt eine Anwerfvorrichtung 48 zum Starten des Antriebsmotors 41. Die Anwerfvorrichtung 48 ist vorteilhaft ein von Hand zu startender Seilzugstarter. Die Anwerfvorrichtung 48 kann jedoch auch eine elektrisch betätigte Anwerfvorrichtung sein. An der der Anwerfvorrichtung 48 abgewandt liegenden Seite des Antriebsmotors 41 ist ein Lüfterrad 49 an der Kurbelwelle 46 festgelegt. Zwischen dem Lüfterrad 49 und dem Führungsrohr 4 ist eine Fliehkraftkupplung 50 angeordnet, deren Abtriebsteil über ein Koppelteil 51 mit einer Antriebswelle 23 verbunden ist. Die Antriebswelle 23 durchragt das Führungsrohr 4 und ist ebenfalls teleskopartig aufgebaut, wie im Folgenden noch näher erläutert wird.

Fig. 3 zeigt den Aufbau der Klemmvorrichtung 12 im Einzelnen. Am Ende des Außenrohrs 11 ist ein Endstück 19 fixiert. Das andere Ende des Außenrohrs 11 ist im Ausführungsbeispiel an der Antriebseinheit 2 festgelegt. Das Endstück 19 ist über eine schematisch gezeigte Rastverbindung 56 drehfest und axial, also in Richtung der Längsmittelachse 30, fest mit dem Außenrohr 11 verbunden. Das Endstück 19 bildet eine Anlagefläche für eine Dichtung 15, die am Außenumfang des Innenrohrs 10 anliegt und den Innenraum zwischen Innenrohr 10 und Außenrohr 11 abdichtet. Der Innenquerschnitt der Dichtung 15 ist dabei auf den Außenquerschnitt des Innenrohrs 10 angepasst.

Das Endstück 19 trägt ein Außengewinde 20 einer Gewindeverbindung 16. Über die Gewindeverbindung 16 sind das Spannstück 13 und das Endstück 19 miteinander verbunden. Wie Fig. 3 zeigt, ist die Gewindeverbindung 16 als Feingewinde mit geringer Gewindesteigung ausgebildet. Die Gewindesteigung beträgt vorteilhaft weniger als 5 mm, insbesondere weniger als 3 mm. Auch eine größere Gewindesteigung, insbesondere eine Gewindesteigung von etwa 5 mm bis etwa 10 mm, kann jedoch vorteilhaft sein. Dadurch kann ein einfaches und schnelles Fixieren und Lösen der Klemmvorrichtung 12 bei geringem Verdrehwinkel des Spannstücks 13 erreicht werden. Das Spannstück 13 trägt ein Innengewinde 17 der Gewindeverbindung 16. Das Spannstück 13 ist über die Gewindeverbindung 17 gegenüber dem Außenrohr 11 beweglich. Zum Innenrohr 10 hat das Spannstück 13 keinen Kontakt. Das Spannstück 13 ist gegenüber dem Innenrohr 10 drehbar und axial verschiebbar angeordnet. In der Wirkverbindung zwischen dem Außenrohr 11 und dem Innenrohr 10 wirken eine Vielzahl von Spannringen 14, die am Außenumfang des Innenrohrs 10 angeordnet sind. Werden die Spannringe 14 in axialer Richtung, also in Richtung der Längsmittelachse 30 des Führungsrohrs 4 zusammengedrückt, so verkleinert sich die Öffnung der Spannringe 14, wodurch sich die Spannringe 14 am Außenumfang des Innenrohrs 10 festklemmen. Die Spannringe 14 sind in axialer Richtung zwischen einer Druckfläche 29 des Spannstücks 13 und dem Endstück 19 angeordnet.

Wie Fig. 3 zeigt, stützen sich die Spannringe 14 jeweils mit einer axialen Seite 65, 66 gegenüber dem Spannstück 13 und mit der anderen axialen Seite 65, 66 gegenüber dem Endstück 19 ab. Die Spannringe 14 sind dabei nach Art einer Reihenschaltung von Federn hintereinandergeschaltet. Die auf die Spannringe 14 ausgeübte Kraft wirkt zwischen dem Außenrohr 11 und dem Spannstück 13 in Richtung der Längsmittelachse 30. Wird das Spannstück 13 so gedreht, dass die Druckfläche 29 sich in Richtung auf das Endstück 19 bewegt, so werden die Spannringe 14 in Richtung der Längsmittelachse 30 zusammengedrückt, wodurch sich deren Innendurchmesser verringert. Dadurch fixieren die Spannringe 14 das Innenrohr 10. Die Spannringe 14 klemmen dabei auf dem Innenrohr 10. Die Spannringe 14 sind gleichzeitig zwischen der Anlagefläche 29 und dem Endstück 19 gehalten und dadurch gegenüber dem Außenrohr 11 in axialer Richtung fixiert. Durch Zusammendrücken der Spannringe 14 wird dadurch auf einfache Weise eine Fixierung des Innenrohrs 10 gegenüber dem Außenrohr 11 erreicht. Das Spannstück 13 ist hülsenförmig ausgebildet. Die Druckfläche 29 ist als nach innen ragender Rand an der der Werkzeugeinheit 3 zugewandten Seite des Spannstücks 13 ausgebildet.

Im Ausführungsbeispiel sind acht Spannringe 14 vorgesehen. Es kann jedoch auch eine andere Anzahl von Spannringen 14 vorgesehen sein.

Damit ein Drehen des Spannstücks 13 für den Bediener leicht möglich ist, besitzt das Spannstück 13 an seiner dem Außenrohr 11 abgewandten, der Werkzeugeinheit 3 zugewandten Seite Griffmulden 18, die auch in Fig. 1 gezeigt sind. Um das Greifen des Spannstücks 13 zu erleichtern, weist das Spannstück 13 an seinem Außenumfang außerdem einen Mantel 39 auf, der vorteilhaft aus einem weichen Kunststoffmaterial besteht. Das Spannstück 13 ist mit dem Mantel 39 vorteilhaft umspritzt. Wie Fig. 1 zeigt, besitzt das Spannstück 13 einen zylindrischen Außenumfang. Auch eine andere Außenkontur kann jedoch vorteilhaft sein, insbesondere, um das Greifen des Spannstücks 13 zu erleichtern. Der Außendurchmesser des Spannstücks 13 ist dabei vergleichsweise groß. Dadurch kann das Spannstück 13 vom Bediener leicht gegriffen werden, und es kann auch bei werkzeugloser Bedienung ein vergleichsweise großes Drehmoment auf das Spannstück 13 aufgebracht werden.

Wie Fig. 3 auch zeigt, ist zwischen dem Endstück 19 und dem Spannstück 13 an der den Spannringen 14 abgewandten Seite der Gewindeverbindung 16 ein Ringraum 34 gebildet. Das Endstück 19 besitzt einen radial nach außen ragenden Rand 21, der den Ringraum 34 in axialer Richtung mindestens teilweise abdeckt. Der Rand 21 dient außerdem zur Zentrierung des Spannstücks 13, wenn das Spannstück 13 in Fig. 3 so weit nach rechts geschraubt wird, dass das Spannstück 13 den Rand 21 übergreift. Das Endstück 19 besitzt außerdem einen Führungsabschnitt 22, mit dem das Endstück 19 am Außenumfang des Innenrohrs 10 anliegt. Im Ausführungsbeispiel bildet der Führungsabschnitt 22 eine Anlagefläche für die Dichtung 15. Fig. 3 zeigt auch die Antriebswelle 23.

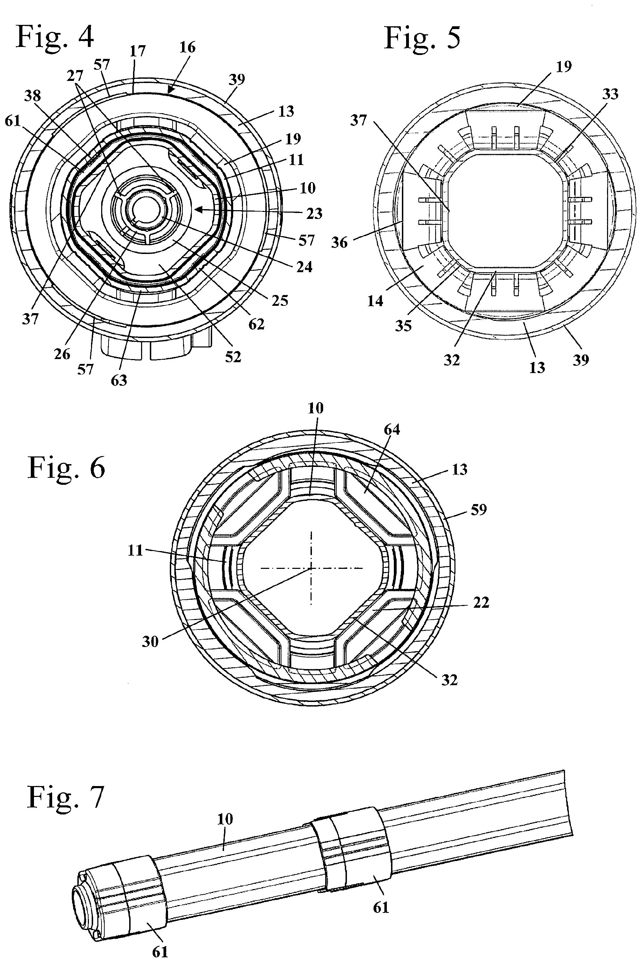

Fig. 4 zeigt die Anordnung der Antriebswelle 23 im Führungsrohr 4. Die Antriebswelle 23 durchragt das Innenrohr 10 und das Außenrohr 11. Die Antriebswelle 23 besitzt eine Innenwelle 24, die über ein Lagerelement 26 in einer Außenwelle 25 gelagert ist. Die Innenwelle 24 und die Außenwelle 25 sind drehfest miteinander verbunden. Die Innenwelle 24 ist teleskopartig in die Außenwelle 25 eingeschoben. Das Lagerelement 26 besitzt nach außen ragende Längsrippen 27, mit denen sich das Lagerelement 26 am Innenumfang der Außenwelle 25 abstützt.

Fig. 4 zeigt auch die Gestaltung des Innenrohrs 10 und des Außenrohrs 11 im Einzelnen. Das Innenrohr 10 besitzt einen unrunden, abgeflachten Querschnitt, der auch in Fig. 5 gezeigt ist. Im Ausführungsbeispiel besitzt das Innenrohr 10 vier abgeflachte, ebene Seiten 32, die über abgerundete Ecken 33 miteinander verbunden sind. An einer der ebenen Seiten 32 verläuft eine Schweißnaht 37, die sich über die gesamte Länge des Innenrohrs 10 erstreckt. An der Innenseite des Innenrohrs 10 bildet die Schweißnaht 37 im Ausführungsbeispiel eine Erhöhung. Das Innenrohr 10 ist als geschweißtes Rohr aus einem ebenen Flächenzuschnitt hergestellt. Nach dem Schweißen des Innenrohrs 10 wird das Innenrohr 10 gerichtet. Dabei werden die ebenen Seiten 32 durch Richtrollen eingedrückt, bis die gewünschte Abmessung des Innenrohrs 10, nämlich der gewünschte Abstand zwischen einander gegenüberliegenden ebenen Seiten 32, erreicht ist. Das Endstück 19 liegt im Ausführungsbeispiel mit seinem Führungsabschnitt 22 (Fig. 3) nur an den ebenen Seiten 32 des Innenrohrs 11 an und nicht an den abgerundeten Ecken 33.

Wie Fig. 4 zeigt, weist auch das Außenrohr 11 einen unrunden, abgeflachten Kreisquerschnitt auf. Auch das Außenrohr 11 besitzt eine in Längsrichtung verlaufende Schweißnaht 38. Das Außenrohr 11 ist ebenfalls als geschweißtes Rohr hergestellt und nach dem Verschweißen unter Verformung gerichtet. Beim Richten entstehen im Ausführungsbeispiel vier ebene Seiten 62, die über abgerundete Ecken 63 miteinander verbunden sind.

Wie Fig. 4 zeigt, überbrückt das Lagerteil 52 den Abstand zwischen der Außenwelle 25 und der Innenseite des Innenrohrs 10 und bewirkt dadurch eine Zentrierung der Außenwelle 25 im Innenrohr 10. Vorteilhaft sind mehrere Lagerteile 52 vorgesehen.

Wie Fig. 4 auch zeigt, sind das Innenrohr 10 und das Außenrohr 11 mit geringem radialem Spiel ineinandergeschoben. Bereits aufgrund der unrunden Querschnittsform von Innenrohr 10 und Außenrohr 11 ergibt sich dadurch eine Verdrehsicherung. Vorzugsweise sind zusätzlich Elemente vorgesehen, die eine Verdrehsicherung zwischen Innenrohr und Außenrohr bewirken. In bevorzugter Ausführung ist an dem in das Außenrohr ragenden Ende des Innenrohrs 10 ein Führungsteil 61 angeordnet, das das Innenrohr 10 in dem Außenrohr 11 führt.

Fig. 7 zeigt ein Führungsteil 61 am Ende des Innenrohrs 10 sowie ein weiteres Führungsteil 61, das in einem Abstand zum Ende des Innenrohrs 10 angeordnet ist. Am Außenumfang der Führungsteile 61 liegt das Außenrohr 11 an, wenn Innenrohr 10 und Außenrohr 11 weit genug ineinandergeschoben sind, wie Fig. 3 schematisch zeigt.

Wie Fig. 5 zeigt, besitzen die Spannringe 14 einen Innenrand 35, der am Außenumfang des Außenrohrs 10 anliegt. Der Innenrand 35 liegt dabei sowohl an den ebenen Seiten 32 als auch an den abgerundeten Ecken 33 an. Wie Fig. 5 auch zeigt, besitzen die Spannringe 14 einen Außenrand 36, der in radialem Abstand zur Innenseite des Spannstücks 13 liegt. An den abgerundeten Ecken des Spannstücks 13 ist dabei nur ein schmaler Spalt zwischen Spannring 14 und Spannstück 13 gebildet. Wie die Figuren 4 und 5 auch zeigen, ist das Innengewinde 17 des Spannstücks 13 mit drei Unterbrechungen 57 ausgeführt. Dadurch ist eine einfache Entformung bei der Herstellung des Spannstücks 13 in einem Spritzgussverfahren möglich.

Fig. 6 zeigt die Anlage des Endstücks 19 am Innenrohr 10. Der Führungsabschnitt 22 des Endstücks 19 ist durch einzelne Finger 64 gebildet, die parallel zur Längsmittelachse 30 verlaufen und die an den ebenen Seiten 32 des Innenrohrs 10 anliegen. An den abgerundeten Ecken 33 des Innenrohrs 10 liegt das Endstück 19 vorteilhaft nicht an. Da die ebenen Seiten 32 mit hoher Genauigkeit gefertigt werden, ergibt sich eine gute, genaue Führung. Die abgerundeten Ecken 33 können bei der Herstellung zum Toleranzausgleich genutzt werden.

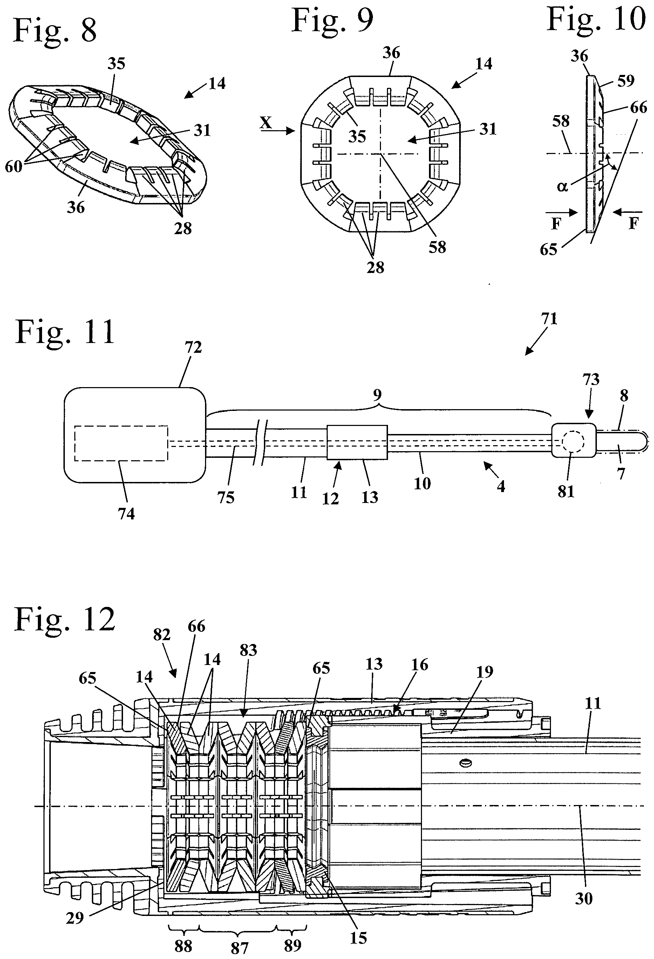

Die Figuren 8 bis 10 zeigen die Gestaltung eines Spannrings 14 im Einzelnen. Wie Fig. 8 zeigt, weist der Spannring 14 eine Vielzahl nach innen ragender Klemmfinger 28 auf. Die Stirnseiten der Klemmfinger 28 bilden den Innenrand 35 des Spannrings 14. Die einzelnen Klemmfinger 28 sind über etwa radial verlaufende Schlitze 60 voneinander getrennt. Der Innenrand 35 begrenzt eine Öffnung 31 des Spannrings 14, durch die das Innenrohr 10 ragt. Wie die Figuren 5 und 9 zeigen, sind im Ausführungsbeispiel jeweils drei Klemmfinger 28 zur Anlage an jeder ebenen Seite 32 und jeweils zwei Klemmfinger 28 zur Anlage an jeder abgerundeten Ecke 33 vorgesehen. Der Außenrand 36 ist als durchgehender Rand ausgebildet, der ebenfalls ebene Seiten aufweist, die über abgerundete Ecken miteinander verbunden sind. Dadurch ergibt sich eine näherungsweise gleiche Länge und Elastizität aller Klemmfinger 28. Der Spannring 14 besitzt eine Mittelachse 58, die in eingebautem Zustand mit der Längsmittelachse 30 des Führungsrohrs 4 zusammenfällt.

Wie die Figuren 8 und 10 zeigen, besitzt der Spannring 14 eine etwa kegelstumpfförmige Gestalt. Der Spannring 14 besitzt eine Stirnseite 59, die mit der Mittelachse 58 einen Winkel α einschließt, der beispielsweise von etwa 40° bis etwa 85° betragen kann. Im Ausführungsbeispiel ist ein Winkel α vorgesehen, der zwischen 60° und 80° beträgt. Der Spannring 14 besitzt eine erste axiale Seite 65, die an den Außenrand 36 angrenzt, sowie eine zweite axiale Seite 66, die an den Innenrand 35 angrenzt. Wird der Spannring 14 in axialer Richtung durch eine Spannkraft F zusammengedrückt, so verschwenken die Klemmfinger 28 nach innen und verringern die Größe der Öffnung 31. In unverspanntem Zustand der Klemmvorrichtung 12 liegen die Innenränder 35 der Spannringe 14 am Innenrohr 10 an, wie Fig. 3 zeigt. Bereits bei geringem Spannweg klemmen die Klemmfinger 28 das Innenrohr 11 dadurch und fixieren das Innenrohr 10 in Richtung der Längsmittelachse 30.

Fig. 11 zeigt ein Ausführungsbeispiel eines Hochentasters 71. Der Hochentaster 71 besitzt anstatt einer Antriebseinheit 2 ein Gehäuse 72, in dem ein Akku 74 angeordnet ist. Anstatt des Akkus 74 kann am Gehäuse 72 auch ein Stromkabel zur Verbindung mit einer Energieversorgung vorgesehen sein. An dem dem Gehäuse 72 abgewandten Ende des Führungsrohrs 4 ist eine Werkzeugeinheit 73 angeordnet, die eine Führungsschiene 7 und eine an der Führungsschiene 7 umlaufend angeordnete Sägekette 8 umfasst. Gleiche Bezugszeichen kennzeichnen dabei in allen Ausführungsbeispielen einander entsprechende Elemente. Der Hochentaster 71 besitzt ein Kabel 75, das den Akku 74 im Gehäuse 72 mit einem Antriebsmotor 81 der Werkzeugeinheit 73 verbindet. Das Kabel 75 ist vorteilhaft als Spiralkabel ausgebildet und besitzt neben Adern zur Energieversorgung auch Adern zur Signalübertragung. Der Antriebsmotor 81 ist als Elektromotor ausgebildet und über das Kabel 75 mit Energie versorgt. Das Kabel 75 ist durch das Führungsrohr 4 geführt und verläuft vollständig durch den Teleskopabschnitt 9, der sich im Ausführungsbeispiel nach Fig. 11 vom Gehäuse 72 bis zur Werkzeugeinheit 73 erstreckt.

Es hat sich gezeigt, dass die Beanspruchung der Spannringe 14 beim Betätigen der Klemmvorrichtung 12 nicht einheitlich ist. Die in der Nähe der Druckfläche 29 angeordneten Spannringe 14 erfahren eine hohe Belastung, während Spannringe 14 aus dem mittleren Bereich zwischen Druckfläche 29 und Dichtung 15 weniger stark belastet sind. Beim Betätigen der Klemmvorrichtung 12 wird an der Druckfläche 29 eine Druckkraft in Richtung der Längsmittelachse 30 in den benachbart zur Druckfläche 29 angeordneten Spannring 14 eingeleitet. Diese Druckkraft wird jeweils auf den angrenzenden Spannring 14 übertragen, solange die Spannringe 14 sich axial bewegen und zusammenrutschen können. Bewirkt die eingeleitete Druckkraft bereits eine zu starke Verformung eines Spannrings 14, so klemmt dieser auf dem Innenrohr 10, und eine weitere axiale Bewegung dieses Spannrings 14 ist verhindert. Dadurch kann die Druckkraft nicht mehr auf den benachbarten Spannring 14 weitergeleitet werden. Ein weiteres Anziehen der Klemmvorrichtung 12 kann eine übermäßige Verformung und Belastung der bereits axial fixierten Spannringe 14 bewirken. Um zu ermöglichen, dass die Spannringe 14 sich bei Betätigung der Klemmeinrichtung 12 in axialer Richtung bewegen können, bis alle Spannringe 14 mit ihren Öffnungen 31 auf dem Innenrohr 10 klemmen, können die Federkonstante der Spannringe 14 oder Spannringpakete angepasst werden.

Fig. 12 zeigt ein Ausführungsbeispiel einer Klemmvorrichtung 82, deren Spannringe 14 eine Spannringanordnung 83 bilden. Die Klemmvorrichtung 82 unterscheidet sich von der Klemmvorrichtung 12 im Wesentlichen durch die Anordnung der Spannringe 14. Die Spannringanordnung 83 umfasst ein erstes Spannringpaket 88, das an der Druckfläche 29 anliegt, ein zweites Spannringpaket 87 sowie ein drittes Spannringpaket 89. Das dritte Spannringpaket 89 ist an der dem ersten Spannringpaket 88 abgewandten Seite des zweiten Spannringpakets 87 angeordnet und liegt an der Dichtung 15 an. Das zweite Spannringpaket 87 ist zwischen dem ersten Spannringpaket 88 und dem dritten Spannringpaket 89 angeordnet. Die Spannringanordnung 83 ist symmetrisch, so dass die Spannringanordnung 83 mit dem ersten Spannringpaket 88 oder mit dem dritten Spannringpaket 89 an der Druckfläche 29 angeordnet werden kann.

Das erste Spannringpaket 88 umfasst mehrere, im Ausführungsbeispiel zwei parallel zueinander geschaltete Spannringe 14. Im zweiten Spannringpaket 87 sind mehrere Spannringe 14 in Reihe zueinander geschaltet. Im dritten Spannringpaket 89 sind mehrere, im Ausführungsbeispiel zwei Spannringe 14 parallel zueinander geschaltet.

Eine Reihenschaltung von Spannringen 14 bezeichnet die gegensinnige Anordnung aufeinanderfolgender Spannringe 14, und eine Parallelschaltung bezeichnet eine gleichsinnige Anordnung aufeinanderfolgender Spannringe 14. Bei der Reihenschaltung liegen benachbarte Spannringe 14 mit ihren konkaven Seiten, also ihren ersten axialen Seiten 65 (Fig. 10), oder ihren konvexen Seiten, also ihren zweiten axialen Seiten 66, aneinander an. Bei der Parallelschaltung liegt eine konkave Seite eines Spannrings 14 an der konvexen Seite des benachbarten Spannrings 14 an.

Beim Ausführungsbeispiel nach Fig. 12 liegen in axialer Richtung benachbarte Spannringe 14 jeweils aneinander an. Die Federkonstante im zweiten Spannringpaket 87 ist aufgrund der Reihenschaltung der Spannringe 14 kleiner als die Federkonstante im ersten Spannringpaket 88. Im Ausführungsbeispiel ist die Federkonstante im zweiten Spannringpaket 87 auch kleiner als die Federkonstante im dritten Spannringpaket 89. Die Federkonstante nimmt ausgehend von der Druckfläche 29 vom ersten Spannringpaket 88 zum zweiten Spannringpaket 87 ab und vom zweiten Spannringpaket 87 zum dritten Spannringpaket 89 zu. Die Federkonstante im ersten Spannringpaket 88 und im dritten Spannringpaket 89 ist gleich groß. Dadurch wird zum Zusammendrücken des ersten und des dritten Spannringpakets 88, 89 eine höhere Kraft benötigt als zum Zusammendrücken des zweiten Spannringpakets 87. Dadurch werden die Spannringe 14 im zweiten Spannringpaket 87 um einen größeren Weg zusammengedrückt und klemmen vor den Spannringen 14 im ersten Spannringpaket 88 und im dritten Spannringpaket 89 auf dem Innenrohr 10 (Fig. 3).

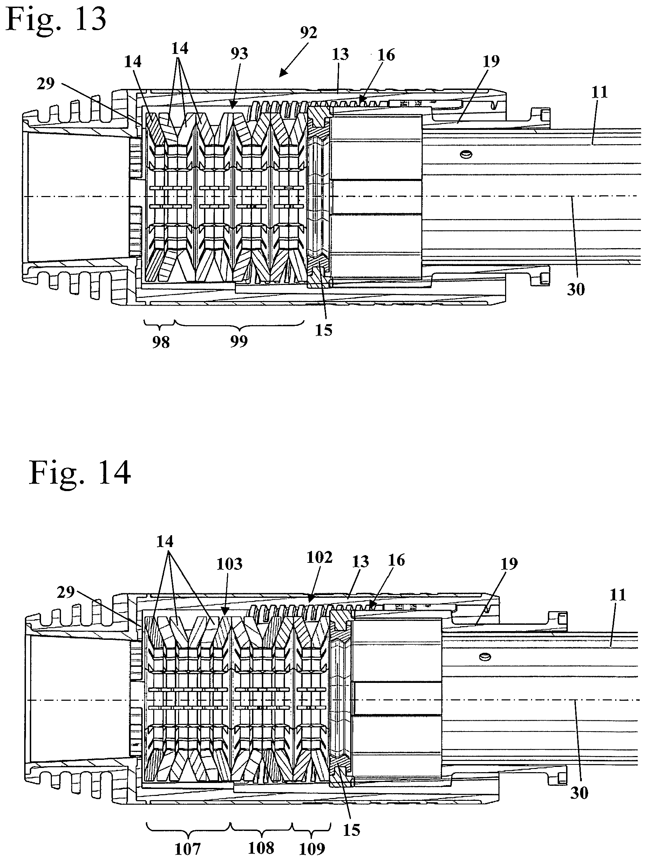

Fig. 13 zeigt ein weiteres Ausführungsbeispiel einer Klemmvorrichtung 92 mit einer Spannringanordnung 93. Die Spannringanordnung 93 umfasst ein Spannringpaket 98, in dem zwei Spannringe 14 parallel zueinander geschaltet sind und ein Spannringpaket 99, in dem mehrere Spannringe 14 in Reihe geschaltet sind. Das Spannringpaket 98 besitzt eine höhere Federkonstante als das Spannringpaket 99 und ist benachbart zur Druckfläche 29 angeordnet. Dadurch nimmt die Federkonstante des Spannringpakets 93 von der Druckfläche 29 in Richtung auf das Endstück 19 ab. Das Spannringpaket 98 wird dadurch weniger stark zusammengedrückt als das Spannringpaket 99.

Fig. 14 zeigt ein Ausführungsbeispiel einer Klemmvorrichtung 102 mit einer Spannringanordnung 103, die Spannringpakete 107, 108 und 109 umfasst. Die Federkonstante der Spannringpakete 107, 108, 109 nimmt dabei von der Druckfläche 29 in Richtung auf das Endstück 19 ab. Innerhalb jedes Spannringpakets 107, 108, 109 ist die Federkonstante konstant. Das Spannringpaket 107 schließt an die Druckfläche 29 an. Das Spannringpaket 107 umfasst zwei Gruppen von jeweils drei parallel zueinander geschalteten Spannringen 14, wobei die beiden Gruppen von Spannringen 14 in Reihe zueinander geschaltet sind. Das daran anschließende Spannringpaket 108 besitzt eine kleinere Federkonstante als das Spannringpaket 107. Das Spannringpaket 108 umfasst zwei Gruppen von jeweils zwei parallel zueinander geschalteten Spannringen 14, wobei die beiden Gruppen von Spannringen 14 in Reihe zueinander geschaltet sind. An das Spannringpaket 108 schließt in Richtung auf das Endstück 19 das Spannringpaket 109 an. Das Spannringpaket 109 umfasst zwei in Reihe zueinander geschaltete Spannringe 14. Die Federkonstante des Spannringpakets 109 ist kleiner als die Federkonstante des Spannringpakets 108. Dadurch wird erreicht, dass beim Fixieren der Klemmvorrichtung 102 zuerst die Spannringe 14 des dem Endstück 19 am nächsten liegenden Spannringpakets 109 auf dem Innenrohr 10 klemmen. Bei weiterem axialen Verschieben des Spannstücks 13 in Richtung auf das Endstück 19 werden die Spannringe 14 des Spannringpakets 108 auf dem Innenrohr 10 festgelegt und erst anschließend die Spannringe 14 des Spannringpakets 107.

Durch geeignete Ausrichtung und Anordnung baugleicher Spannringe lässt sich die Federkonstante in unterschiedlichen Bereichen einer Spannringanordnung geeignet einstellen. Es kann auch zweckmäßig sein, Spannringe einer Spannringanordnung mit unterschiedlichen Innendurchmessern und/oder unterschiedlichen Längen der Klemmfinger auszubilden, um eine Anlage an dem Innenrohr bei unterschiedlich starker Verformung der Spannringe zu erreichen. Auch eine Kombination aus unterschiedlichen Abmessungen und geeigneter Anordnung der Spannringe kann vorteilhaft sein, um ein gewünschtes Klemmverhalten auf dem Innenrohr zu erreichen.

Vorteilhaft ist die Federkonstante eines Spannringpakets oder die Verformung eines Spannringpakets, die notwendig ist, um die Spannringe des Spannringpakets auf dem Innenrohr festzuklemmen, umso größer, je weiter das Spannringpaket vom Anschlag, insbesondere vom Endstück 19, entfernt liegt. Dadurch wird eine gleichmäßigere Belastung der Spannringe ermöglicht.

In den Ausführungsbeispielen kontaktieren der äußerste und innerste Spannring 14 die Druckfläche 29 bzw. den Anschlag jeweils mit ihrer konkaven, ersten axialen Seite 65. Die Krafteinleitung in den äußersten Spannring 14 bzw. Ausleitung aus dem innersten Spannring 14 erfolgt an ihrem großen Durchmesser. Es kann aber auch vorteilhaft sein, dass die Spannringe 14 mit ihrer konvexen, zweiten axialen Seite 66 zur Druckfläche 29 bzw. dem Anschlag zeigen und der Kontakt damit am kleinen Durchmesser erfolgt. In den Ausführungsbeispielen wird der Anschlag durch die Dichtung 15 gebildet.

Gleiche Bezugszeichen bezeichnen dabei in allen Figuren einander entsprechende Elemente. Zu den Figuren 12 bis 14 nicht im Einzelnen beschriebene Elemente sind vorteilhaft entsprechend ausgebildet wie zur Klemmvorrichtung 12 beschrieben.

## Patentansprüche

1. Handgeführtes Arbeitsgerät mit einem Antriebsmotor (41, 81) und mit einer Werkzeugeinheit (3, 73), wobei die Werkzeugeinheit (3, 73) ein von dem Antriebsmotor (41, 81) angetriebenes Werkzeug umfasst, wobei das Arbeitsgerät ein Führungsrohr (4) mit einem Teleskopabschnitt (9) besitzt, wobei der Teleskopabschnitt (9) ein Außenrohr (11) und ein darin längsverschiebbar geführtes Innenrohr (10) umfasst, wobei durch das Führungsrohr (4) Mittel zur Übertragung der Antriebsenergie für das Werkzeug geführt sind, und wobei eine Klemmvorrichtung (12) zur Fixierung des Innenrohrs (10) gegenüber dem Außenrohr (11) vorgesehen ist,
**dadurch gekennzeichnet, dass** die Klemmvorrichtung (12) ein Spannstück (13) umfasst, das gegenüber dem Innenrohr (10) drehbar gelagert ist und über eine Gewindeverbindung (16) mit dem Außenrohr (11) verbunden ist, dass die Klemmvorrichtung (12) mindestens einen am Außenumfang des Innenrohrs (10) angeordneten, gewölbten Spannring (14) umfasst, wobei ein Zusammendrücken des Spannrings (14) in Richtung einer Längsmittelachse des Führungsrohrs (4) eine Verkleinerung der Öffnung (31) des Spannrings (14) bewirkt, und dass der mindestens eine Spannring (14) sich an der einen axialen Seite (65, 66) gegenüber dem Außenrohr (11) und an der anderen axialen Seite (65, 66) gegenüber dem Spannstück (13) abstützt.

2. Arbeitsgerät nach Anspruch 1,
**dadurch gekennzeichnet, dass** am Außenrohr (11) ein Endstück (19) fixiert ist, das ein Außengewinde (20) der Gewindeverbindung (16) trägt.

3. Arbeitsgerät nach Anspruch 2,
**dadurch gekennzeichnet, dass** das Innenrohr (10) und das Außenrohr (11) einen von der Kreisform abweichenden Querschnitt aufweisen.

4. Arbeitsgerät nach Anspruch 3,
**dadurch gekennzeichnet, dass** der Querschnitt des Innenrohrs (10) ebene Seiten (32) besitzt, die über abgerundete Ecken (33) verbunden sind.

5. Arbeitsgerät nach Anspruch 4,
**dadurch gekennzeichnet, dass** das Innenrohr (10) an mindestens einer seiner ebenen Seiten (32) verdrehsicher gegenüber dem Außenrohr (11) gehalten ist.

6. Arbeitsgerät nach Anspruch 4 oder 5,
**dadurch gekennzeichnet, dass** das Endstück (19) mindestens teilweise an der Außenkontur des Innenrohrs (10) anliegt und das Innenrohr (10) und das Außenrohr (11) verdrehsicher zueinander positioniert.

7. Arbeitsgerät nach Anspruch 6,
**dadurch gekennzeichnet, dass** das Endstück (19) nur an den ebenen Seiten (32) des Innenrohrs (10) und nicht an den abgerundeten Ecken (33) anliegt.

8. Arbeitsgerät nach einem der Ansprüche 2 bis 7,
**dadurch gekennzeichnet, dass** das Spannstück (13) eine Druckfläche (29) aufweist, an der sich der mindestens eine Spannring (14) axial abstützt, und dass das Endstück (19) an seiner der Druckfläche (29) abgewandten Seite Mittel zur Zentrierung des Spannstücks (13) besitzt.

9. Arbeitsgerät nach einem der Ansprüche 1 bis 8,
**dadurch gekennzeichnet, dass** der mindestens eine Spannring (14) radial nach innen ragende Klemmfinger (28) aufweist, die in verspanntem Zustand mit ihrem freien Ende gegen das Innenrohr (10) drücken.

10. Arbeitsgerät nach einem der Ansprüche 1 bis 9,
**dadurch gekennzeichnet, dass** der mindestens eine Spannring (14) in ungespanntem Zustand am Innenrohr (10) anliegt, und dass der Außenrand (36) des mindestens einen Spannrings (14) zum Spannstück (13) einen radialen Abstand besitzt.

11. Arbeitsgerät nach einem der Ansprüche 1 bis 10,
**dadurch gekennzeichnet, dass** mehrere Spannringe (14) vorgesehen sind.

12. Arbeitsgerät nach Anspruch 11,
**dadurch gekennzeichnet, dass** die Spannringe (14) eine Spannringanordnung (83, 93, 103) bilden, in der mindestens zwei Spannringe (14) in Reihenschaltung zueinander angeordnet sind.

13. Arbeitsgerät nach Anspruch 11,
**dadurch gekennzeichnet, dass** die Spannringanordnung (83, 93, 103) mindestens zwei in Reihe zueinander geschaltete Spannringpakete (87, 88, 89, 98, 99, 107, 108, 109) umfasst, wobei die Federkonstante der Spannringpakete (87, 88, 89, 98, 99, 107, 108, 109) unterschiedlich ist.

14. Arbeitsgerät nach Anspruch 13,
**dadurch gekennzeichnet, dass** angrenzend an mindestens eine Druckfläche (29) ein erstes Spannringpaket (88, 98, 107) mit einer ersten Federkonstante angeordnet ist und angrenzend an das erste Spannringpaket (88, 98, 107) ein zweites Spannringpaket (87, 99, 108) mit einer zweiten Federkonstante, wobei die zweite Federkonstante niedriger als die erste Federkonstante ist.

15. Arbeitsgerät nach einem der Ansprüche 1 bis 14,
**dadurch gekennzeichnet, dass** der mindestens eine Spannring (14) aus Kunststoff ist.

16. Arbeitsgerät nach einem der Ansprüche 1 bis 15,
**dadurch gekennzeichnet, dass** der Antriebsmotor Teil einer Antriebseinheit (2) ist, die an einem ersten Ende (5) des Führungsrohrs (4) angeordnet ist, dass die Werkzeugeinheit (3) an einem zweiten Ende (6) des Führungsrohrs (4) angeordnet ist, und dass durch das Führungsrohr (4) eine Antriebswelle (23) ragt, die als Teleskopwelle ausgebildet ist.

17. Arbeitsgerät nach Anspruch 16,
**dadurch gekennzeichnet, dass** die Antriebswelle (23) über mindestens ein Lagerteil (52) in dem Innenrohr (10) gelagert ist.

## Claims

1. Hand-held implement having a drive motor (41, 81) and having a tool unit (3, 73), wherein the tool unit (3, 73) comprises a tool which is driven by the drive motor (41, 81), wherein the implement has a guide tube (4) with a telescopic portion (9), wherein the telescopic portion (9) comprises an outer tube (11) and an inner tube (10), which is guided in a longitudinally displaceable manner in the outer tube, wherein means for transmitting the drive power for the tool are guided through the guide tube (4), and wherein a clamping device (12) is provided for the purpose of fixing the inner tube (10) in relation to the outer tube (11),
**characterized in that** the clamping device (12) comprises a tensioning piece (13), which is mounted in a rotatable manner in relation to the inner tube (10), and is connected to the outer tube (11) via a threaded connection (16), **in that** the clamping device (12) comprise at least one dished tensioning ring (14), which is arranged on the outer circumferential of the inner tube (10), wherein the size of the opening (31) of the tensioning ring (14) is reduced by virtue of the tensioning ring (14) being compressed in the direction of a longitudinal centre axis of the guide tube (4), and **in that** the at least one tensioning ring (14) is supported, on the one axial side (65, 66), in relation to the outer tube (11) and, on the other axial side (65, 66), in relation to the tensioning piece (13).

2. Implement according to Claim 1,
**characterized in that** an endpiece (19), which bears an external thread (20) of the threaded connection (16), is fixed on the outer tube (11).

3. Implement according to Claim 2,
**characterized in that** the inner tube (10) and the outer tube (11) have a non-circular cross section.

4. Implement according to Claim 3,
**characterized in that** the cross section of the inner tube (10) has planar sides (32), which are connected via rounded corners (33).

5. Implement according to Claim 4,
**characterized in that**, on at least one of its planar sides (32), the inner tube (10) is retained in a rotationally fixed manner in relation to the outer tube (11).

6. Implement according to Claim 4 or 5,
**characterized in that** the endpiece (19) butts, at least in part, against the outer contour of the inner tube (10) and positions the inner tube (10) and the outer tube (11) in a rotationally fixed manner in relation to one another.

7. Implement according to Claim 6,
**characterized in that** the endpiece (19) butts only against the planar sides (32) of the inner tube (10), and not against the rounded corners (33).

8. Implement according to one of Claims 2 to 7,
**characterized in that** the tensioning piece (13) has a pressure-exerting surface (29), on which the at least one tensioning ring (14) is supported axially, and **in that**, on its side which is directed away from the pressure-exerting surface (29), the endpiece (19) has means for centring the tensioning piece (13).

9. Implement according to one of Claims 1 to 8,
**characterized in that** the at least one tensioning ring (14) has radially inwardly projecting clamping fingers (28), which in the braced state have their free end pushing against the inner tube (10).

10. Implement according to one of Claims 1 to 9,
**characterized in that**, in the non-tension state, the at least one tensioning ring (14) butts against the inner tube (10), and **in that** the outer edge (36) of the at least one tensioning ring (14) is at a radial distance from the tensioning piece (13).

11. Implement according to one of Claims 1 to 10,
**characterized in that** a plurality of tensioning rings (14) are provided.

12. Implement according to Claim 11,
**characterized in that** the tensioning rings (14) form a tensioning-ring arrangement (83, 93, 103), in which at least two tensioning rings (14) are arranged in a row.

13. Implement according to Claim 11,
**characterized in that** the tensioning-ring arrangement (83, 93, 103) comprises at least two tensioning-ring assemblies (87, 88, 89, 98, 99, 107, 108, 109) arranged in a row, wherein the spring constants of the tensioning-ring assemblies (87, 88, 89, 98, 99, 107, 108, 109) are different.

14. Implement according to Claim 13,
**characterized in that** a first tensioning-ring assembly (88, 98, 107) with a first spring constant is arranged adjacent to at least one pressure-exerting surface (29), and a second tensioning-ring assembly (87, 99, 108) with a second spring constant is arranged adjacent to the first tensioning-ring assembly (88, 98, 107), wherein the second spring constant is lower than the first spring constant.

15. Implement according to one of Claims 1 to 14,
**characterized in that** the at least one tensioning ring (14) is made from plastic.

16. Implement according to one of Claims 1 to 15,
**characterized in that** the drive motor is part of a drive unit (2), which is arranged at the first end (5) of the guide tube (4), **in that** the tool unit (3) is arranged at a second end (6) of the guide tube (4), and **in that** a drive shaft (23) designed in the form of a telescopic shaft projects through the guide tube (4).

17. Implement according to Claim 16,
**characterized in that** the drive shaft (23) is mounted in the inner tube (10) via at least one bearing part (52).

## Revendications

1. Instrument de travail à main comprenant un moteur d'entraînement (41, 81) et une unité d'outil (3, 73), l'unité d'outil (3, 73) comprenant un outil entraîné par le moteur d'entraînement (41, 81), l'outil possédant un tube de guidage (4) pourvu d'une portion télescopique (9), la portion télescopique (9) comprenant un tube extérieur (11) et un tube intérieur (10) guidé à l'intérieur de manière coulissante longitudinalement, des moyens destinés à transmettre l'énergie d'entraînement de l'outil étant guidés à travers le tube de guidage (4), et un dispositif de serrage (12) étant prévu pour fixer le tube intérieur (10) par rapport au tube extérieur (11),
**caractérisé en ce que** le dispositif de serrage (12) comprend une pièce de tension (13) qui est montée de manière rotative par rapport au tube intérieur (10) et qui est reliée au tube extérieur (11) par un raccord fileté (16), **en ce que** le dispositif de serrage (12) comprend au moins une bague de tension incurvée (14) disposée sur la circonférence extérieure du tube intérieur (10), une compression de la bague de tension (14) en direction d'un axe médian longitudinal du tube de guidage (4) provoquant une réduction de l'ouverture (31) de la bague de tension (14), et **en ce que** l'au moins une bague de tension (14) s'appuie sur l'un des côtés axiaux (65, 66) par rapport au tube extérieur (11) et sur l'autre côté axial (65, 66) par rapport à la pièce de tension (13).

2. Instrument de travail selon la revendication 1,
**caractérisé en ce qu'**une pièce d'extrémité (19), qui porte un filetage extérieur (20) du raccord fileté (16), est fixée au tube extérieur (11).

3. Instrument selon la revendication 2,
**caractérisé en ce que** le tube intérieur (10) et le tube extérieur (11) ont une section transversale qui s'écarte de la forme circulaire.

4. Instrument de travail selon la revendication 3,
**caractérisé en ce que** la section transversale du tube intérieur (10) possède des côtés plans (32) qui sont reliés par des coins arrondis (33).

5. Instrument de travail selon la revendication 4,
**caractérisé en ce que** le tube intérieur (10) est maintenu sur au moins un de ses côtés plans (32) solidairement en rotation par rapport au tube extérieur (11).

6. Instrument de travail selon la revendication 4 ou 5,
**caractérisé en ce que** la pièce d'extrémité (19) est en appui au moins partiellement sur le contour extérieur du tube intérieur (10) et positionne le tube intérieur (10) et le tube extérieur (11) solidairement en rotation l'un par rapport à l'autre.

7. Instrument de travail selon la revendication 6,
**caractérisé en ce que** la pièce d'extrémité (19) n'est en appui que sur les côtés plans (32) du tube intérieur (10) et ne l'est pas sur les coins arrondis (33).

8. Instrument de travail selon l'une des revendications 2 à 7,
**caractérisé en ce que** la pièce de tension (13) comporte une surface de pression (29) sur laquelle l'au moins une bague de tension (14) est axialement en appui, et **en ce que** la pièce d'extrémité (19) possède des moyens destinés à centrer la pièce de tension (13) sur son côté dirigé à l'opposé de sa surface de pression (29).

9. Instrument de travail selon l'une des revendications 1 à 8,
**caractérisé en ce que** l'au moins une bague de tension (14) comporte des doigts de serrage (28) qui font saillie radialement vers l'intérieur et qui pressent, à l'état tendu, avec leur extrémité libre contre le tube intérieur (10).

10. Instrument de travail selon l'une des revendications 1 à 9,
**caractérisé en ce que** l'au moins une bague de tension (14) est en appui sur le tube intérieur (10) à l'état non tendu, et **en ce que** le bord extérieur (36) de l'au moins une bague de tension (14) est à une distance radiale de la pièce de tension (13).

11. Instrument de travail selon l'une des revendications 1 à 10,
**caractérisé en ce que** plusieurs bagues de tension (14) sont prévues.

12. Instrument de travail selon la revendication 11,
**caractérisé en ce que** les bagues de tension (14) forment un ensemble de bagues de tension (83, 93, 103) dans lequel au moins deux bagues de tension (14) sont disposées en série l'une par rapport à l'autre.

13. Instrument de travail selon la revendication 11,
**caractérisé en ce que** l'ensemble de bagues de tension (83, 93, 103) comprend au moins deux paquets de bagues de tension (87, 88, 89, 98, 99, 107, 108, 109) montés en série l'un avec l'autre, la flexibilité des paquets de bagues de tension (87, 88, 89, 98, 99, 107, 108, 109) étant différente.

14. Instrument de travail selon la revendication 13,
**caractérisé en ce qu'**un premier paquet de bagues de tension (88, 98, 107) présentant une première flexibilité est disposé de manière adjacente à au moins une surface de pression (29) et un deuxième paquet de bagues de tension (87, 99, 108) présentant une deuxième flexibilité est disposé de manière adjacente au premier paquet de bagues de tension (88, 98, 107), la deuxième flexibilité étant inférieure à la première flexibilité.

15. Instrument de travail selon l'une des revendications 1 à 14,
**caractérisé en ce que** l'au moins une bague de tension (14) est en matière synthétique.

16. Instrument de travail selon l'une des revendications 1 à 15,
**caractérisé en ce que** le moteur d'entraînement fait partie d'une unité d'entraînement (2) qui est disposée à une première extrémité (5) du tube de guidage (4), **en ce que** l'unité d'outil (3) est disposée à une deuxième extrémité (6) du tube de guidage (4) et **en ce qu'**un arbre d'entraînement (23), qui est conçu comme un arbre télescopique, fait saillie à travers le tube de guidage (4).

17. Instrument de travail selon la revendication 16,
**caractérisé en ce que** l'arbre d'entraînement (23) est monté dans le tube intérieur (10) par le biais d'au moins une pièce formant palier (52).
